# EUROPEAN PATENT APPLICATION

(11) **EP 4 636 655 A1**
(43) Date of publication of application: **22.10.2025**
(21) Application number: 22968585.4
(22) Date of filing: 16.12.2022
(51) Int. Cl.: G06N 5/045

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: KATO, Takashi, Kawasaki-shi, Kanagawa 211-8588 (JP)
(74) Representative: Hoffmann Eitle
(86) International application number: PCT/JP2022/046557
(87) International publication number: WO 2024/127678

(57) **Abstract**

An information processing device generates a feature vector for each rule represented by a model. The information processing device classifies each rule represented by the model into any one of multiple clusters based on the Euclidean distance between the generated feature vectors. The information processing device identifies an inclusion relationship between clusters among the multiple clusters. The information processing device identifies a hierarchical relationship between clusters based on the inclusion relationships between clusters. The information processing device displays a graph (1000) representing the identified hierarchical relationship between clusters. In response to a designation of any node in a displayed graph (1000), the information processing device displays explanatory information (1010) related to one or more rules classified into a cluster represented by the designated any node.

## Description

### TECHNICAL FIELD

The present invention relates to an information processing program, an information processing method, and an information processing device.

### BACKGROUND ART

Conventionally, there is a technique for generating, by machine learning, a model that has multiple rules each representing a condition for classifying data using one or more explanatory variables and that outputs a label representing the result of classifying data including plural input explanatory variables.

As a prior art, for example, there is a technique for generating rules describing the operation of a black-box machine learning model by combining conditions identified based on the output of a proxy black-box model that mimics the operation of the black-box machine learning model.

### PRIOR ART DOCUMENT

Document 1: U.S. Patent Application Publication No. 2019/0147369

### DISCLOSURE OF INVENTION

### PROBLEM TO BE SOLVED BY THE INVENTION

In the prior art, however, it is difficult for a user to easily grasp the contents of a model. For example, in the case where a list of multiple rules that a model has is output so that the user can refer to it, the more the number of rules included in the model, the more likely it is that the workload and work time required for the user to grasp the contents of the model will increase.

In one aspect, the present invention aims to make it easier to grasp the contents of a model.

### MEANS FOR SOLVING PROBLEM

According to one aspect, an information processing program, an information processing method, and an information processing device are proposed for executing a process including: obtaining a plurality of data including values of a plurality of explanatory variables; obtaining a rule set including rules representing conditions for classifying the plurality of data using one or more of the plurality of explanatory variables; calculating a plurality of feature values, each of the plurality of feature values being calculated for a corresponding one of the rule set based on one or more data of the obtained plurality of data, the one or more data satisfying a condition represented by the corresponding one of the rule set; classifying the rules of the rule set into any of a plurality of clusters, based on a similarity between feature values of the calculated plurality of feature values; identifying an inclusion relationship between clusters of the plurality of clusters, based on the conditions represented by the rules classified into each of the plurality of clusters; identifying a hierarchical relationship between the clusters of the plurality of clusters, based on the identified inclusion relationship between the clusters of the plurality of clusters; and outputting information indicating the identified hierarchical relationship between the clusters of the plurality of clusters.

### EFFECT OF THE INVENTION

According to one aspect, it becomes possible to make it easier to grasp the contents of a model.

### BRIEF DESCRIPTION OF DRAWINGS

Fig. 1 is an explanatory view depicting one example of an information processing method according to an embodiment.
Fig. 2 is an explanatory view depicting an example of an information processing system 200.
Fig. 3 is a block diagram depicting an example of a hardware configuration of the information processing device 100.
Fig. 4 is a block diagram depicting an example of a functional configuration of the information processing device 100.
Fig. 5 is an explanatory view depicting a flow of operation of the information processing device 100.
Fig. 6 is an explanatory view depicting an example of learning a model 600.
Fig. 7 is an explanatory view depicting an example in which a feature vector for each rule is generated.
Fig. 8 is an explanatory view depicting an example of identifying an inclusion relationship between clusters.
Fig. 9 is an explanatory view depicting an example of identifying an inclusion relationship between clusters.
Fig. 10 is an explanatory view depicting an example of displaying a hierarchical relationship between clusters.
Fig. 11 is an explanatory view depicting a specific example of learning a model.
Fig. 12 is an explanatory view depicting a specific example of learning a model.
Fig. 13 is an explanatory view depicting a specific example in which feature vectors, respectively, related to rules are generated.
Fig. 14 is an explanatory view depicting a specific example in which feature vectors, respectively, related to rules are generated.
Fig. 15 is an explanatory view depicting a specific example of clustering a rule set.
Fig. 16 is an explanatory view depicting a specific example of clustering a rule set.
Fig. 17 is an explanatory view depicting a first specific example in which explanatory information related to a cluster is generated.
Fig. 18 is an explanatory view depicting the first specific example in which explanatory information related to a cluster is generated.
Fig. 19 is an explanatory view depicting a second specific example in which explanatory information for a cluster is generated.
Fig. 20 is an explanatory view depicting the second specific example in which explanatory information for a cluster is generated.
Fig. 21 is an explanatory view depicting a specific example in which an inclusion rate between clusters is calculated.
Fig. 22 is an explanatory view depicting a specific example in which an inclusion rate between clusters is calculated.
Fig. 23 is an explanatory view depicting a specific example of identifying hierarchical relationships between clusters.
Fig. 24 is an explanatory view depicting a specific example in which hierarchical relationships between clusters are displayed.
Fig. 25 is a flowchart depicting an example of an overall processing procedure.

### BEST MODE(S) FOR CARRYING OUT THE INVENTION

Embodiments of an information processing program, an information processing method, and an information processing device according to the present invention are described in detail with reference to the accompanying drawings.

### (One Example of Information Processing Method according to Embodiment)

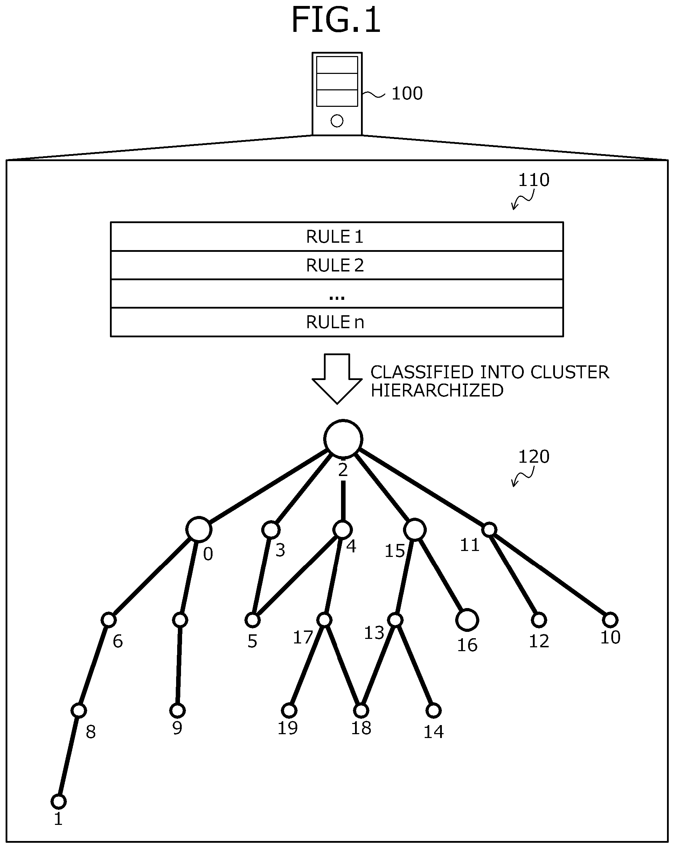

Fig. 1 is an explanatory view depicting one example of an information processing method according to an embodiment. An information processing device 100 is a computer for providing information that makes it easier to grasp the contents of a model. The information processing device 100 is, for example, a server or a personal computer (PC).

The model has, for example, a function of outputting a label that represents a result of classifying data including multiple explanatory variables that have been input. For example, the model includes multiple rules each representing a condition for classifying data using one or more explanatory variables. For example, the model is of a type called a white-box model. For example, the model is of a type called a rule-based model.

The model is, for example, generated by machine learning. For example, the model includes rules generated by machine learning. More specifically, the model includes rules generated based on training data that associates samples including values of multiple explanatory variables with correct labels that indicate the result of classifying the samples. For example, the model may further include rules generated manually.

Here, the user may wish to grasp the contents of the model. The contents of the model indicate, for example, how the model uses multiple explanatory variables included in the input data to classify the input data. For example, a user wishes to grasp the contents of a model to thereby grasp how reliable the model is, or how reliable the label representing the result of classifying data output by the model is.

Thus, for example, a method is conceivable in which a list of multiple rules included in the model is output so that the user can refer to the list, thereby making it easier for the user to grasp the contents of the model. However, with this method, it may be difficult for the user to easily grasp the contents of the model.

For example, the number of rules included in the model generated by machine learning tends to increase as the complexity of the format of the data to be input increases. For example, the number of rules included in the model generated by machine learning tends increase as the number of explanatory variables in the data to be input increases. The more rules included in the model, the greater the workload and work time required when the user refers to the list of rules included in the model and tries to grasp the contents of the model.

Thus, in the present embodiment, an information processing method that can make it easier to grasp the contents of the model is described.

The information processing device 100 obtains multiple data. The data includes, for example, values of multiple explanatory variables. Among the multiple data, any two pieces of data may include values of explanatory variables of different types. The information processing device 100 obtains the multiple data by receiving input of the multiple data based on, for example, an operation input by a user. The information processing device 100 may obtain the multiple data by receiving the multiple data from another computer.

The information processing device 100 obtains a rule set 110 including multiple rules. A rule represents a condition for classifying data using one or more explanatory variables. The rule set 110 forms a model that outputs a label representing a result of classifying data including the input explanatory variables. The information processing device 100 obtains the rule set 110 by, for example, generating the rule set 110 by machine learning based on multiple training data. The training data is, for example, data in which a sample including values of multiple explanatory variables is associated with a correct label indicating a result of classifying the sample. The information processing device 100 may obtain the rule set 110 by, for example, receiving the rule set 110 from another computer. The information processing device 100 may obtain the rule set 110 by receiving an input of the rule set 110 based on, for example, an operation input by a user.

(1-1) The information processing device 100 calculates feature values for the rules, based on one or more pieces of data that, among the obtained pieces of data, satisfy conditions represented by rules included in the obtained rule set 110. A feature value is, for example, a feature vector for a rule, the feature vector having a component that is a statistical value in one or more data that satisfy a condition represented by the rule, the statistical value being related to each explanatory variable of multiple explanatory variables. The statistical value is, for example, the ratio of data in which the explanatory variable value is a specific value to the one or more pieces of data that satisfy a condition represented by the rule. The statistical value may be, for example, the maximum value, minimum value, average value, mode, or median value of the explanatory variable value in one or more pieces of data that satisfy a condition represented by the rule. As a result, the information processing device 100 can determine the degree of similarity between the rules and obtain a guideline for clustering multiple rules.

(1-2) The information processing device 100 classifies each rule into one of multiple clusters based on the similarity between feature values among the feature values calculated, respectively, for the rules. The information processing device 100 classifies each rule into one of multiple clusters based on the similarity between the feature values using the x-means method. As described, the information processing device 100 can group two or more rules that are similar to each other into one cluster.

(1-3) The information processing device 100 identifies an inclusion relationship between the clusters among the multiple clusters, based on the conditions represented by the rules classified into each of the multiple clusters. For example, among the multiple data obtained for each cluster, the information processing device 100 identifies a data set that satisfies conditions represented by one or more rules classified into the cluster. A data set is, for example, a group of data that satisfy at least any of the conditions represented by one or more rules. The data set may be, for example, a group of data that satisfy a condition obtained by combining conditions represented by one or more rules.

For each combination of clusters among the multiple clusters, the information processing device 100 calculates, for example, an inclusion rate of one cluster with respect to the other cluster. For example, the inclusion rate is a value that represents the proportion of overlapping data between one data set that satisfies the conditions represented by one or more rules classified into one cluster and the other data set that satisfies the conditions represented by one or more rules classified into the other cluster, in the entirety of the other data set.

The information processing device 100 determines, for example, for each combination of clusters in the multiple clusters, whether the inclusion rate of one cluster with respect to the other cluster is at least equal to a threshold value. For example, when the inclusion rate of one cluster with respect to the other cluster for any combination of clusters is at least equal to a threshold value, the information processing device 100 determines that one cluster in the combination has an inclusion relationship that includes the other cluster.

As described, the information processing device 100 specifies the inclusion relationship between clusters among the multiple clusters by determining, for example, for each combination of clusters among the multiple clusters, whether one cluster has an inclusion relationship that includes the other cluster. Thereby, the information processing device 100 can specify the inclusion relationships between the clusters in the multiple clusters and can specify the relationships between the rules forming the model.

(1-4) The information processing device 100 specifies hierarchical relationships between the clusters among the multiple clusters, based on the inclusion relationships between the clusters among the specified clusters. For example, for each combination of the multiple clusters, when one cluster is in an inclusion relationship that includes the other cluster, the information processing device 100 determines that the one cluster is in a hierarchical relationship that is higher than the other cluster.

As described, the information processing device 100 specifies the hierarchical relationships between the clusters among the multiple clusters by determining for each combination of the multiple clusters, whether one cluster is in a hierarchical relationship that is higher than the other cluster. Thereby, the information processing device 100 can specify the hierarchical relationships between the clusters among the multiple clusters and can specify the relationships between the rules forming the model and can obtain a guideline that makes it easier to intuitively grasp the relationships between the rules forming the model.

(1-5) The information processing device 100 outputs information indicating the hierarchical relationships between the clusters in the specified clusters. The information processing device 100 outputs, for example, a graph 120 showing hierarchical relationships between clusters among the multiple clusters. Thus, the information processing device 100 can make it easier for a user to intuitively grasp the relationships between the rules that form a model and can make it easier for the user to understand the contents of the model.

Here, while a case where the information processing device 100 operates independently has been described, configuration is not limited hereto. For example, the information processing device 100 may cooperate with another computer. For example, the information processing device 100 may cooperate with another computer that learns rules that represent conditions for classifying data using one or more explanatory variables. For example, multiple computers may implement functions of the information processing device 100. For example, the functions of the information processing device 100 may be implemented on the cloud.

### (Example of Information Processing System 200)

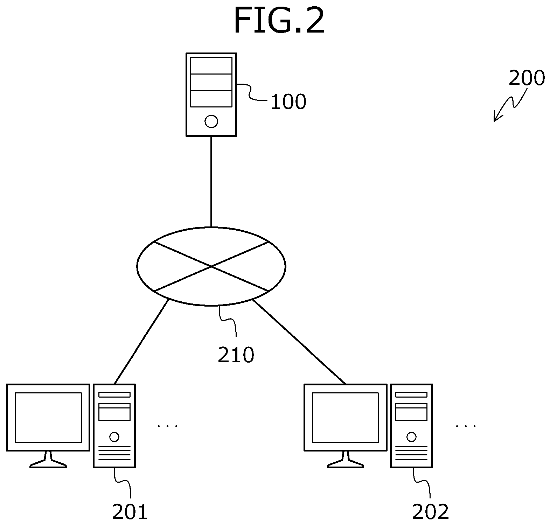

Next, an example of an information processing system 200 to which the information processing device 100 depicted in Fig. 1 is applied is described with reference to Fig. 2.

Fig. 2 is an explanatory view depicting an example of the information processing system 200. In Fig. 2, the information processing system 200 includes an information processing device 100, a learning device 201, and a client device 202.

In the information processing system 200, the information processing device 100 and the learning device 201 are connected via a wired or wireless network 210. The network 210 is, for example, a local area network (LAN), a wide area network (WAN), or the Internet. In the information processing system 200, the information processing device 100 and the client device 202 are connected via the wired or wireless network 210.

The information processing device 100 is a computer that makes it easier for a user of a model to grasp the contents of the model. The information processing device 100 obtains multiple data. The data include, for example, values of multiple explanatory variables. The information processing device 100 obtains the multiple data by receiving input of the multiple data based on, for example, an operation input by a user of the device. The information processing device 100 may obtain the multiple data by receiving the multiple data from another computer. The other computer is, for example, the learning device 201.

The information processing device 100 obtains a rule set including multiple rules forming a model. A rule represents a condition for classifying data using one or more explanatory variables. The rule set forms a model that outputs a label representing a result of classifying input data including multiple explanatory variables. The information processing device 100 obtains, for example, the rule set by receiving the rule set from another computer. The other computer is, for example, the learning device 201.

The information processing device 100 calculates a feature vector for a rule, based on one or more data that, among the obtained multiple data, satisfy a condition represented by the rule included in the obtained rule set. The feature vector includes as a component, for example, a statistical value related to each explanatory variable of the multiple explanatory variables in the one or more data that satisfy a condition represented by the rule.

The information processing device 100 classifies each rule into one of multiple clusters based on a similarity between the feature vectors among the calculated feature vectors of each rule. The information processing device 100 identifies an inclusion relationship between the clusters based on the conditions represented by the rules for classifying the clusters into each of the clusters. The information processing device 100 identifies a hierarchical relationship between the clusters based on the inclusion relationship between the clusters in the identified clusters.

The information processing device 100 outputs information indicating the hierarchical relationship between the clusters in the identified clusters. The information processing device 100 transmits information indicating the hierarchical relationship between the clusters in the identified clusters to another computer. The other computer is, for example, the client device 202. The information processing device 100 is, for example, a server or a PC.

The learning device 201 is a computer for generating rules indicating conditions for classifying data, using one or more explanatory variables. The learning device 201 obtains, for example, multiple training data. The training data is, for example, data in which a sample including values of multiple explanatory variables is associated with a correct label indicating a result of classifying the sample. For example, the learning device 201 obtains multiple pieces of training data by receiving input of the multiple pieces of training data based on an operation input by a user of the device. The learning device 201 generates a rule set by machine learning based on the multiple pieces of training data, for example. The learning device 201 transmits the generated rule set to the information processing device 100, for example. The learning device 201 is, for example, a server or a PC.

The client device 202 is a computer used by a user of the model. The client device 202 receives, for example, information indicating the hierarchical relationship between the clusters in the plural identified clusters, from the information processing device 100. The client device 202 outputs the received information indicating the hierarchical relationship between the clusters in the multiple clusters so that the user of the model can refer to the information. The client device 202 is, for example, a PC, a tablet terminal, or a smartphone.

Here, while a case has been described in which the information processing device 100 is a device different from the learning device 201, configuration is not limited hereto. For example, the information processing device 100 may have a function of the learning device 201 and may also operate as the learning device 201.

Here, while a case where the information processing device 100 is a device different from the client device 202 has been described, configuration is not limited hereto. For example, the information processing device 100 may have a function of the client device 202 and may also operate as the client device 202.

### (Application Example of Information Processing System 200)

Next, an application example of the information processing system 200 is described. The information processing system 200 can be applied to a case where a model having a function of outputting a label representing the result of classifying an input data set using, for example, a data set published on the Internet as training data is learned. The information processing system 200 can be specifically applied to a case where a model is learned, the model having a function of outputting a label indicating whether an input animal is a mammal according to a data set representing a feature of the animal.

Thus, the information processing system 200 can make it easier for a user of the model to grasp the validity or reliability of the learned model. The information processing system 200 can make it easier for the user of the model to accept the classification results of the model. The information processing system 200 can make it easier for the user of the model to use the model with confidence.

For example, the information processing system 200 can be applied to a case of learning a model having a function of outputting a label indicating a prediction of whether a viewer of an input website will purchase a product, according to a data set indicating a feature of the viewer. As described, the information processing system 200 can make it easier for the user of the model to grasp the validity or reliability of the learned model in the field of marketing. The information processing system 200 can make it easier for the user of the model to accept the classification results of the model. The information processing system 200 can make it easier for the user of the model to use the model with confidence.

### (Hardware Configuration Example of Information Processing Device 100)

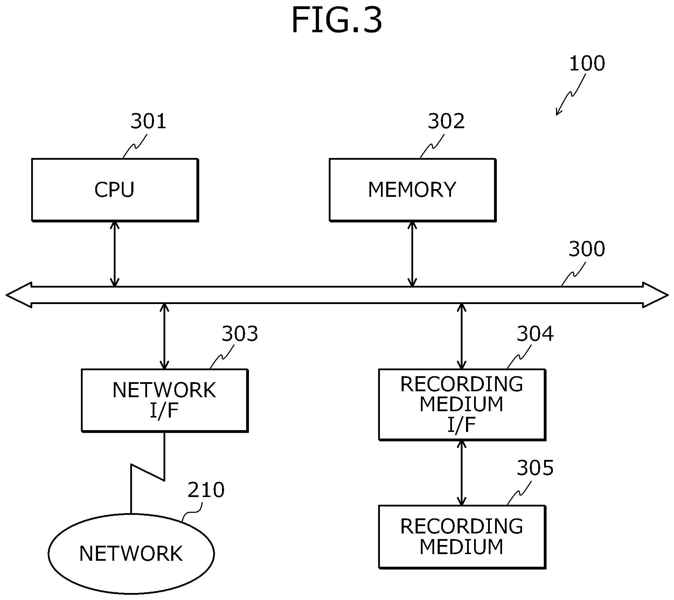

Next, an example of a hardware configuration of the information processing device 100 is described with reference to Fig. 3.

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. The component are connected to each other by a bus 300.

Here, the CPU 301 governs overall control of the information processing device 100. The memory 302 includes, for example, a read-only memory (ROM), a random-access memory (RAM), and a flash ROM. For example, the flash ROM and the ROM store various programs and the RAM is used as a work area for the CPU 301. The programs stored in the memory 302 are loaded onto the CPU 301, whereby encoded processes are executed by the CPU 301.

The network I/F 303 is connected to the network 210 through a communications line and is connected to other computers via the network 210. The network I/F 303 manages an internal interface with the network 210 and controls the input and output of data from other computers. The network I/F 303 is, for example, a modem or a LAN adapter.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a non-volatile memory that stores data written thereto under the control of the recording medium I/F 304. The recording medium 305 is, for example, a disk, a semiconductor memory, a USB memory, or the like. The recording medium 305 may be detachable from the information processing device 100.

In addition to the above-mentioned components, the information processing device 100 may have, for example, a keyboard, a mouse, a display, a printer, a scanner, a microphone, a speaker, etc. The information processing device 100 may have the recording medium I/Fs 304 and recording media 305 in plural. The information processing device 100 may omit the recording medium I/Fs 304 and recording media 305.

### (Hardware Configuration Example of Learning Device 201)

An example of a hardware configuration of the learning device 201 is specifically similar to the hardware configuration example of the information processing device 100 depicted in Fig. 3 and thus, description thereof is omitted.

### (Hardware Configuration Example of Client Device 202)

An example of a hardware configuration example of the client device 202 is specifically similar to the hardware configuration example of the information processing device 100 depicted in Fig. 3 and thus, description thereof is omitted.

### (Functional Configuration Example of Information Processing Device 100)

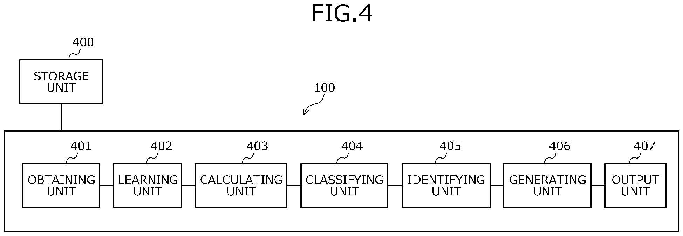

Next, an example of a functional configuration example of the information processing device 100 is described with reference to Fig. 4.

Fig. 4 is a block diagram depicting an example of a functional configuration of the information processing device 100. The information processing device 100 includes a storage unit 400, an obtaining unit 401, a learning unit 402, a calculating unit 403, a classifying unit 404, an identifying unit 405, a generating unit 406, and an output unit 407.

The storage unit 400 is implemented by, for example, a storage area such as the memory 302 or the recording medium 305 depicted in Fig. 3. In the following, while a case where the storage unit 400 is included in the information processing device 100 is described, configuration is not limited hereto. For example, the storage unit 400 may be included in a device different from the information processing device 100 and the storage contents of the storage unit 400 may be referred to from the information processing device 100.

The obtaining unit 401 to the output unit 407 function as an example of a controller. For example, functions of the obtaining unit 401 to the output unit 407 are implemented by, for example, causing the CPU 301 to execute a program stored in a storage area such as the memory 302 or the recording medium 305 depicted in Fig. 3, or by the network I/F 303. Processing results of the functional units are stored to, for example, a storage area such as the memory 302 or the recording medium 305 depicted in Fig. 3.

The storage unit 400 stores various types of information that is referred to or updated in the processing of the functional units. The storage unit 400 stores therein, for example, multiple input data. Each of the multiple input data includes, for example, values of multiple explanatory variables. Each of the multiple input data is obtained by, for example, the obtaining unit 401.

The storage unit 400 stores, for example, a rule set. The rule set includes, for example, multiple rules that represent conditions for classifying data using one or more explanatory variables. For example, the rule set includes rules generated by machine learning. For example, the rule set may further include rules generated manually. The rule set is generated, for example, by the learning unit 402. The rule set may be obtained, for example, by the obtaining unit 401.

The storage unit 400 stores, for example, multiple pieces of training data. The training data is, for example, data in which samples including values of multiple explanatory variables are associated with correct labels indicating the results of classifying the samples. The training data is obtained, for example, by the obtaining unit 401.

The obtaining unit 401 obtains various types of information used in the processing by the functional units. The obtaining unit 401 stores the obtained various types of information to the storage unit 400, or outputs the obtained information to the functional units. The obtaining unit 401 may also output various types of information stored in the storage unit 400 to each functional unit. The obtaining unit 401 may obtain various types of information based on, for example, an operational input by a user. The obtaining unit 401 may receive various information from, for example, a device other than the information processing device 100.

The obtaining unit 401 obtains multiple input data. The obtaining unit 401 obtains the multiple input data by receiving the multiple input data from another computer. The other computer is, for example, the learning device 201. The obtaining unit 401 may obtain the multiple input data by, for example, receiving input of the multiple input data based on an operational input by a user of the device.

The obtaining unit 401 obtains a rule set. The obtaining unit 401 obtains the rule set by receiving the rule set from another computer. The other computer is, for example, the learning device 201. The obtaining unit 401 may obtain the rule set by, for example, receiving input of the rule set based on an operational input by a user of the device.

The obtaining unit 401 obtains multiple pieces of training data. For example, the obtaining unit 401 obtains the multiple pieces of training data by receiving the multiple pieces of training data from another computer. The other computer is, for example, the learning device 201. For example, the obtaining unit 401 may obtain the multiple pieces of training data by receiving input of the multiple pieces of training data based on an operation input by a user of the device. For example, the training data may be used as input data.

The obtaining unit 401 may receive a start trigger for starting the processing by any of the functional units. The start trigger may be, for example, a predetermined operation input by a user. The start trigger may be, for example, a reception of predetermined information from another computer. The start trigger may be, for example, output of predetermined information by any of the functional units.

For example, the obtaining unit 401 may receive the multiple pieces of training data as a start trigger for starting the processing of the learning unit 402. The obtaining unit 401 may receive, for example, the multiple input data as a start trigger for starting the processing of the calculating unit 403, the classifying unit 404, the identifying unit 405, and the generating unit 406.

The learning unit 402 generates a rule set. The rule set includes, for example, multiple rules that represent conditions for classifying data using one or more explanatory variables. For example, the learning unit 402 generates multiple rules by machine learning, based on multiple training data obtained by the obtaining unit 401 and generates a rule set including the multiple rules. As a result, the learning unit 402 can generate a rule set on the information processing device 100 thereof and makes it easier for the information processing device 100 to operate independently.

The calculating unit 403 calculates a feature value related to each rule included in the rule set obtained by the obtaining unit 401 or generated by the learning unit 402. A feature value is, for example, a feature vector related to the rule. The calculating unit 403 calculates a feature value for a rule based on one or more pieces of input data that, among the multiple pieces of input data obtained by the obtaining unit 401, satisfy the conditions represented by the rules included in the rule set obtained by the obtaining unit 401 or generated by the learning unit 402.

For example, among the multiple pieces of input data obtained by the obtaining unit 401, the calculating unit 403 identifies one or more pieces of input data that satisfy the conditions represented by the rules included in the rule set obtained by the obtaining unit 401 or generated by the learning unit 402. For example, the calculating unit 403 calculates a feature vector for each rule included in the rule set, the component thereof being a statistical value related to each of the multiple explanatory variables in the identified one or more pieces of input data. As a result, the calculating unit 403 can evaluate the similarity between rules based on a comparison of the feature values.

The classifying unit 404 classifies each rule included in the rule set obtained by the obtaining unit 401 or generated by the learning unit 402, into one of multiple clusters. The classifying unit 404 classifies each rule into one of multiple clusters, for example, based on the similarity between feature values among the calculated feature values of the rules.

For example, the classifying unit 404 calculates the sum of squares of the differences between the components of the explanatory variables between the calculated feature vectors of each rule as the similarity. For example, the classifying unit 404 classifies each rule included in the rule set into one of multiple clusters, based on the calculated similarity. Thereby, the classifying unit 404 can group two or more rules that are similar to each other into one cluster. The classifying unit 404 can enable a user of the model to grasp two or more rules collectively. The classifying unit 404 can enable a user of the model to grasp two or more rules as a group, so that the user of the model can grasp the contents of the model.

The identifying unit 405 identifies the inclusion relationship between the clusters among the multiple clusters, based on the conditions expressed by the rules classified into the multiple clusters. From among the multiple input data obtained by the obtaining unit 401, the identifying unit 405, for example, identifies, for each cluster, a data set that satisfies the conditions represented by one or more rules classified into the cluster. For example, from among the multiple input data obtained by the obtaining unit 401, the identifying unit 405 identifies, for each of the multiple clusters, a data set that includes input data that satisfies at least any of the conditions represented by one or more rules classified into the cluster. For example, from among the multiple input data obtained by the obtaining unit 401, the identifying unit 405 may identify, for each cluster, a data set that includes input data that satisfies a combined condition represented by one or more rules classified into the cluster.

The identifying unit 405, for example, for each combination of clusters among the multiple clusters, calculates an inclusion rate of one cluster with respect to the other cluster. The inclusion rate is, for example, a value that indicates the proportion of input data that overlaps between one data set that satisfies conditions represented by one or more rules classified into one cluster and the other data set that satisfies conditions represented by one or more rules classified into the other cluster, the proportion in the entirety of the other data set.

The inclusion rate may be, for example, a value representing the proportion of overlapping conditions between a condition set represented by one or more rules classified into one cluster and a condition set represented by one or more rules classified into the other cluster, the proportion in the entire condition set represented by one or more rules classified into the other cluster.

For example, for each combination of clusters among the multiple clusters, the identifying unit 405 determines whether the inclusion rate of one cluster with respect to the other cluster is at least equal to a threshold value. For example, when the inclusion rate of one cluster with respect to the other cluster for any combination of clusters is at least equal to a threshold value, the identifying unit 405 determines that one cluster in the combination has an inclusion relationship that includes the other cluster.

For example, for each combination of clusters, the identifying unit 405 determines whether one cluster has an inclusion relationship that includes the other cluster and thereby identifies an inclusion relationship between clusters among the multiple clusters. As described, the identifying unit 405 can identify an inclusion relationship between clusters among the multiple clusters and can identify the relationship between rules forming a model.

The generating unit 406 identifies hierarchical relationships between the clusters based on the inclusion relationships between the clusters among the identified clusters. For example, for each combination of clusters in the multiple clusters, when one cluster is in an inclusion relationship that includes the other cluster, the generating unit 406 determines that the one cluster is in a hierarchical relationship that is higher than the other cluster.

The generating unit 406 identifies hierarchical relationships between the clusters among the multiple clusters by determining, for example, for each combination of clusters among the multiple clusters, whether one cluster is in a hierarchical relationship that is higher than the other cluster. As described, the generating unit 406 can identify hierarchical relationships between the clusters among the multiple clusters, can identify relationships between rules that form a model, and can obtain guidelines that make it easier to intuitively grasp the relationships between rules that form a model.

The generating unit 406 generates information indicating hierarchical relationships between the clusters among the identified clusters. For example, the generating unit 406 generates a graph indicating hierarchical relationships between the clusters among the identified clusters. The graph is formed, for example, by nodes representing clusters and edges connecting nodes that represent the respective clusters having a hierarchical relationship. For example, the graph includes a node representing the highest cluster as a root node. For example, the graph is a tree structure. As described, the generating unit 406 can obtain reference information that makes it easier for the user of the model to intuitively grasp the hierarchical relationship between the clusters.

The generating unit 406 generates, for each cluster, information indicating a feature of one or more rules classified into the cluster. For example, the generating unit 406 generates a graph indicating a feature of one or more rules classified into the cluster. For example, the graph is formed, for example, by nodes representing rules and edges between the nodes that represent the respective rules having a connection relationship. For example, the graph is a tree structure. As described, the generating unit 406 can obtain reference information that makes it easier for the user of the model to intuitively grasp the one or more rules classified into the cluster.

The output unit 407 outputs the processing results of at least one of the functional units. The output format is, for example, display on a display, print out on a printer, transmission to an external device via the network I/F 303, or storage to a storage area such as the memory 302 or the recording medium 305. As described, the output unit 407 can notify the user of the processing results of at least any of the functional units, thereby improving the convenience of the information processing device 100.

The output unit 407 outputs information indicating the hierarchical relationships between the clusters among the multiple clusters generated by the generating unit 406. The output unit 407 outputs, for example, information indicating the hierarchical relationships between the clusters among the multiple clusters so that the user of the model can refer to the information. For example, the output unit 407 transmits information indicating the hierarchical relationship between the clusters among the multiple clusters to the client device 202. As a result, the output unit 407 can make it easier for the user of the model to intuitively grasp the hierarchical relationship between the clusters and can make it easier to intuitively grasp the relationship between the rules forming the model.

When the output unit 407 receives the designation of any one of the multiple clusters, the output unit 407 outputs information generated by the generating unit 406 indicating a feature of one or more rules classified into any one of the clusters for which the designation has been received. The output unit 407 outputs, for example, information indicating a feature of one or more rules classified into any one of the clusters for which the designation has been received, so that the user of the model can refer to the information. For example, the output unit 407 transmits information indicating a feature of one or more rules classified into any one of the clusters for which the designation has been received, to the client device 202. As a result, the output unit 407 can make it easier for the user of the model to intuitively grasp the connection relationship between the rules in one or more similar rules among the rules forming the model.

### (Flow of operation of Information Processing Device 100)

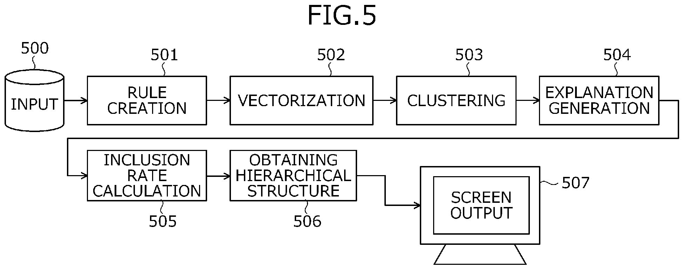

Next, a flow of operation of the information processing device 100 is described with reference to Fig. 5.

Fig. 5 is an explanatory view depicting a flow of operation of the information processing device 100. In Fig. 5, the information processing device 100 receives input 500 of multiple training data. The training data are, for example, data in which a sample including values of multiple explanatory variables is associated with a label indicating a correct answer resulting from classifying the sample by a model.

The information processing device 100 performs a "rule creation" process 501 and thereby learns, by machine learning, a model including a rule set based on multiple training data. The model has a function of outputting a label indicating a result of classifying the data in response to input of data including values of multiple explanatory variables. A rule is information indicating a condition for classifying data using one or more explanatory variables. The model is an artificial intelligence (AI) model. The model is, for example, an XAI (explainable AI) model. The model is, for example, a rule-based model.

The information processing device 100 performs a "vectorization" process 502 to generate feature vectors, respectively, corresponding to the rules of the rule set included in the model. For example, the information processing device 100 identifies, for each rule, one or more pieces of training data that satisfy the condition represented by the rule among multiple pieces of training data. For example, the information processing device 100 generates, for each rule, a feature vector including, as a component, a statistical value for each explanatory variable in the identified one or more pieces of training data. The statistical value is, for example, a maximum value, a minimum value, an average value, a median value, or a mode value. The statistical value may be, for example, a variance.

The information processing device 100 performs a "clustering" process 503 to classify each rule included in the rule set into one of multiple clusters. For example, by the x-means method, the information processing device 100 classifies each rule included in the rule set into one of multiple clusters, based on the Euclidean distance between the calculated feature vectors.

The information processing device 100 generates explanatory information for each of the multiple clusters by performing an "explanation generation" process 504. The explanatory information is information concerning one or more rules classified into a cluster. The explanatory information is, for example, information that indicates what feature the one or more rules classified into a cluster have. For example, the information processing device 100 identifies, for each cluster, one or more pieces of training data that satisfy at least any of the conditions expressed by the one or more rules classified into the cluster, from among the multiple pieces of training data. For example, the information processing device 100 generates new training data for each cluster by adding labels representing positive (correct) examples to the values of multiple explanatory variables included in the identified one or more pieces of training data. For example, the information processing device 100 generates, for each cluster, a decision tree that classifies data based on the new generated training data, as explanatory information. For example, for each cluster, the information processing device 100 may generate, as explanatory information, a rule-based model that classifies data based on the new generated training data.

The information processing device 100 calculates the inclusion rate between clusters by performing an "inclusion rate calculation" process 505. For each combination of clusters, the information processing device 100 calculates, for example, an inclusion rate of one cluster with respect to the other cluster of the combination. For example, the information processing device 100 identifies, for each cluster, a training data set that satisfies the conditions represented by one or more rules classified into the cluster among multiple training data. For example, the information processing device 100 identifies, for each combination of clusters, training data that overlaps between a training data set that satisfies the conditions represented by one or more rules classified into one cluster and a training data set that satisfies the conditions represented by one or more rules classified into the other cluster of the combination. For example, for each combination of clusters, the information processing device 100 calculates, as an inclusion rate, the proportion of the identified overlapping training data to the entire training data set that satisfies the conditions represented by one or more rules classified into the other cluster of the combination.

The information processing device 100 identifies an inclusion relationship between the clusters by performing an "obtaining a hierarchical structure" process 506 and identifies a hierarchical relationship between the clusters based on the inclusion relationship between the clusters. For each combination of clusters, the information processing device 100 judges whether one cluster is in a hierarchical relationship with the other cluster of the combination, based on whether the inclusion rate of the one cluster with respect to the other cluster is at least equal to a threshold value. With respect to any of the combinations of the clusters, when the inclusion rate of the one cluster with respect to the other cluster is at least equal to a threshold value, the information processing device 100 identifies the hierarchical relationship thereof to be one in which the one cluster is in a higher order than the other cluster. For each combination of clusters, the information processing device 100 identifies the hierarchical relationship between the clusters by judging whether one cluster is in a hierarchical relationship with the other cluster.

The information processing device 100 displays a graph representing the identified hierarchical relationship between clusters on the display by performing a "screen output" process 507. As a result, the information processing device 100 can make it easier for the user of the model to intuitively grasp the relationship between the rules forming the model and to easily grasp the contents of the model.

### (An Example of Operation of Information Processing Device 100)

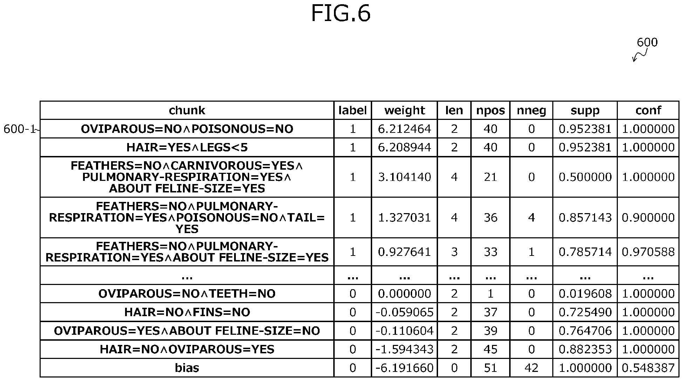

Next, an example of operation of the information processing device 100 is described with reference to Figs. 6 to 10. First, an example of the information processing device 100 learning the model 600 is described with reference to Fig. 6.

Fig. 6 is an explanatory view depicting an example of learning the model 600. In Fig. 6, the information processing device 100 obtains multiple training data indicating features related to animals. The training data indicate, for example, multiple feature values related to animals, each of which is an explanatory variable, in association with a correct label indicating whether the animal is a mammal. A feature value indicates, for example, the size of the animal, the presence or absence of body hair, the presence or absence of feathers, whether the animal is carnivorous, whether the animal breathes with lungs, or whether the animal is oviparous. The information processing device 100 obtains, for example, 93 pieces of training data. There are, for example, 15 explanatory variables. The information processing device 100 learns the model 600 based on, for example, the obtained 93 pieces of training data.

The model 600 is, for example, a rule-based model, and includes multiple rules each representing a condition for classifying whether an animal is a mammal using one or more explanatory variables. The model 600 is implemented by, for example, a storage area such as the memory 302 or the recording medium 305 of the information processing device 100 depicted in Fig. 3. As depicted in Fig. 6, the model 600 has fields of chunk, label, weight, len, npos, nneg, supp, and conf. The model 600 stores each rule as a record 600-a by setting information in each field for each rule. "a" is an arbitrary integer.

In the chunk field, a rule is set. In the label field, flag information indicating whether the rule is a rule representing a mammal is set. For example, a value of 1 for the flag information indicates that the rule represents a mammal and a value of 0 for the flag information indicates that the rule represents a non-mammal. In the weight field, the weight of the rule is set. In the len field, the number of conditions forming the rule is set.

In the npos field, the number of pieces of training data that, among the multiple pieces of training data, satisfy the rule and match the flag information is set. For example, a value of 1 for the flag information indicates that the number of pieces of training data that, among the multiple pieces of training data, satisfy the rule and include a correct label indicating that the subject is a mammal is set. For example, a value of 0 for the flag information indicates that, among the multiple pieces of training data, the number of pieces of training data that satisfy the rule and include a correct label indicating that the subject is not a mammal is set.

In the nneg field, the number of pieces of training data that, among the multiple pieces of training data, satisfy the rule and do not match the flag information is set. For example, a value of 1 for the flag information indicates that the number of pieces of training data that, among the multiple pieces of training data, satisfy the rule and include a correct label indicating that the subject is not a mammal is set. In the nneg field, for example, a value of 0 for the flag information indicates that the number of pieces of training data that satisfy the rule and include a correct label indicating that the subject is a mammal is set.

In the supp field, npos/total_npos is set. total_npos is the sum of npos of the rules. In the conf field, npos/(npos+nneg) is set. The model 600 represents, for example, 321 rules. For example, the information processing device 100 may delete from the model 600 a rule that represents a condition that is not satisfied by at least x% or more of the 93 pieces of training data. "x" is, for example, 1. For example, the information processing device 100 may delete from the model 600 a rule in which npos/(npos+nneg) is less than y. "y" is, for example, 0.9.

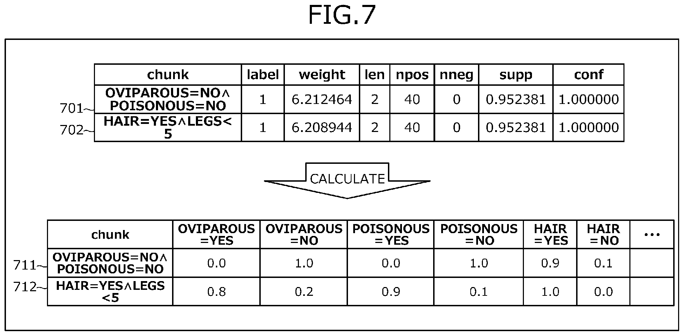

Next, an example in which the information processing device 100 generates a feature vector for each rule represented by the model 600, based on multiple training data is described with reference to Fig. 7.

Fig. 7 is an explanatory view depicting an example in which a feature vector for each rule is generated. In Fig. 7, among the multiple training data, the information processing device 100 identifies, for each rule represented by the model 600, one or more pieces of training data that satisfy one or more conditions represented by the rule. The information processing device 100 generates, for each rule represented by the model 600, a feature vector including, as components, statistical values for each explanatory variable in the identified one or more pieces of training data. The information processing device 100 may generate a feature vector by replacing values 'yes' and 'no' of the explanatory variable with values 1 and 0.

For example, the information processing device 100 generates a feature vector 711 including, as components, statistical values for each explanatory variable in one or more pieces of training data that, among the multiple training data, satisfy the rule 701. For example, the information processing device 100 generates a feature vector 712 including, as components, statistical values for each explanatory variable in one or more pieces of training data that, among the multiple pieces of training data, satisfy the rule 702.

The information processing device 100 classifies each rule represented by the model 600 into one of multiple clusters based on the Euclidean distance between the generated feature vectors using the x-means method. For example, it is assumed that the information processing device 100 classifies each rule represented by the model 600 into one of 20 clusters. In the following description, an i-th cluster may be referred to as "cluster i". "i" is, for example, 0 to 19.

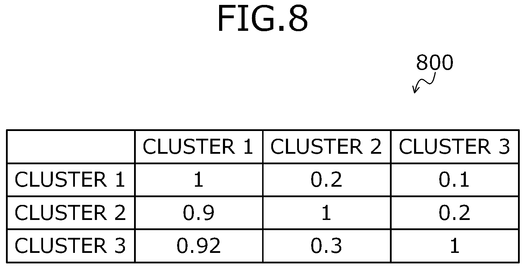

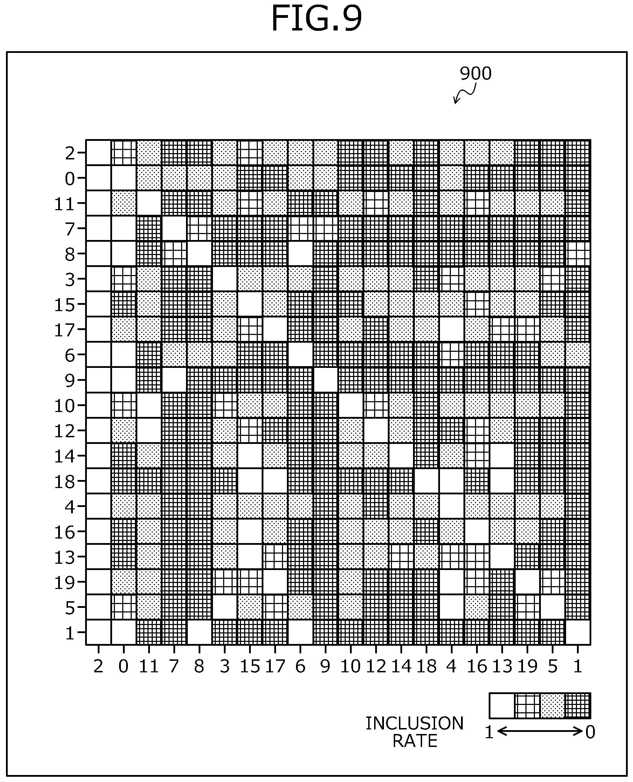

Next, an example of the information processing device 100 identifying an inclusion relationship between the clusters in the multiple clusters classified is described with reference to Figs. 8 and 9.

Figs. 8 and 9 are explanatory views depicting an example of identifying an inclusion relationship between the clusters. In Fig. 8, the information processing device 100 calculates the inclusion rate between the clusters. For each combination of the clusters, the information processing device 100 calculates the inclusion rate of one cluster in the other cluster and the inclusion rate of the other cluster in the one cluster. The inclusion rate of the one cluster in the other cluster is defined as, for example, (A∩B)/A. "A" is a training data group that satisfies at least any of the conditions represented by one or more rules classified into the other cluster. "B" is a training data group that satisfies at least any of the conditions represented by one or more rules classified into the one cluster.

The information processing device 100 calculates the inclusion rate between the clusters as depicted in, for example, table 800. For example, the information processing device 100 calculates the inclusion rate of cluster 1 with respect to cluster 2 and the inclusion rate of cluster 2 with respect to cluster 1 for a combination of cluster 1 and cluster 2. For example, the information processing device 100 calculates the inclusion rate of cluster 1 with respect to cluster 3 and the inclusion rate of cluster 3 with respect to cluster 1 for a combination of cluster 1 and cluster 3. For example, the information processing device 100 calculates the inclusion rate of cluster 2 with respect to cluster 3 and the inclusion rate of cluster 3 with respect to cluster 2 for a combination of cluster 2 and cluster 3. Description is given with reference to Fig. 9.

In Fig. 9, it is assumed that the information processing device 100 calculates the inclusion rates between clusters among 20 clusters as depicted in table 900. The horizontal axis indicates cluster numbers. The vertical axis indicates cluster numbers. Table 900 shows the inclusion rates of clusters having the cluster numbers on the horizontal axis with respect to clusters having the cluster numbers on the vertical axis. White indicates that the inclusion rate belongs to a first range closest to 1, among multiple ranges between inclusion rates of 0 to 1. The upper end of a first range is, for example, 1.

Light meshed hatching indicates inclusion rates that belong to a second range, which is next closest to 1 after the first range, among the multiple ranges between inclusion rates of 0 to 1. Dotted hatching indicates an inclusion rate that belongs to a third range, which is next closest to 1 after the second range, among the plural ranges. Thick meshed hatching indicates inclusion rates that belong to a fourth range, which is next closest to 1 after the third range and closest to 0, among the plural ranges. The lower end of the fourth range is, for example, 0.

For each combination of clusters, the information processing device 100 judges whether one cluster includes the other cluster based on whether the inclusion rate of the one cluster for the other cluster is at least equal to a threshold value. The threshold value is, for example, 0.9. The threshold value is, for example, set in advance by the user of the model. For example, for any combination of clusters, when the inclusion rate of one cluster of a combination with respect to the other cluster of the combination is at least equal to a threshold, the information processing device 100 determines that the one cluster includes the other cluster. For each combination of clusters, the information processing device 100 determines whether one cluster includes the other cluster and thereby identifies an inclusion relationship between clusters, among the multiple clusters.

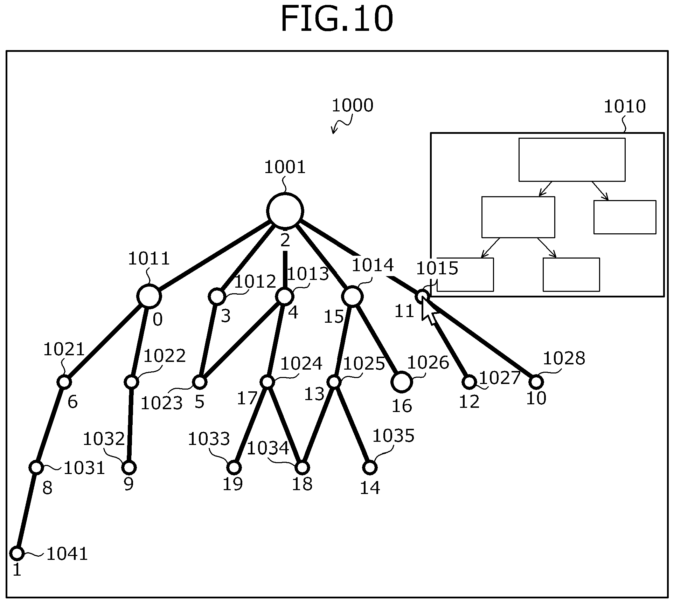

Next, with reference to Fig. 10, an example is described in which the information processing device 100 displays a hierarchical relationship between clusters, based on the inclusion relationship between the identified clusters .

Fig. 10 is an explanatory view depicting an example of displaying a hierarchical relationship between clusters. In Fig. 10, the information processing device 100 identifies a hierarchical relationship between clusters among multiple clusters, based on the inclusion relationship between clusters among the multiple clusters. For example, for each combination of clusters, the information processing device 100 determines whether one cluster is in a hierarchical relationship higher than the other cluster, and whether the other cluster is in a hierarchical relationship higher than the one cluster. For example, for any combination of clusters, when one cluster of a combination includes the other cluster of the combination, thereby having an inclusion relationship, and the one cluster is a higher-level cluster than the other cluster, the information processing device 100 identifies a hierarchical relationship between the clusters.

The information processing device 100 generates a graph 1000 that indicates the identified hierarchical relationships between clusters. The graph 1000 includes nodes 1001, 1011, 1012, 1013, 1014, 1015, 1021, 1022, 1023, 1024, 1025, 1026, 1027, 1028, 1031, 1032, 1033, 1034, 1035, and 1041, which represent clusters. In the example depicted in Fig. 10, the nodes 1001, 1011 to 1015, 1021 to 1028, 1031 to 1035, and 1041 are indicated by circles, for example. The numbers appended to the bottom of the nodes 1001, 1011 to 1015, 1021 to 1028, 1031 to 1035, and 1041 are the cluster numbers that the nodes represent, respectively. The graph 1000 includes edges connecting nodes that represent respective clusters of cluster combinations having a hierarchical relationship among the nodes 1001, 1011 to 1015, 1021 to 1028, 1031 to 1035, and 1041.

The information processing device 100 displays the graph 1000. At this time, the information processing device 100 may display the graph 1000 so that the larger is the number of rules classified into the clusters represented by the nodes 1001, 1011 to 1015, 1021 to 1028, 1031 to 1035, and 1041, the larger is the size of the circle.

The information processing device 100 receives a designation of any one of the nodes 1001, 1011 to 1015, 1021 to 1028, 1031 to 1035, and 1041 of the displayed graph 1000. The information processing device 100 receives, for example, a click on any of the nodes 1001, 1011 to 1015, 1021 to 1028, 1031 to 1035, and 1041 of the displayed graph 1000 as a designation of the node.

The information processing device 100 may display explanatory information 1010 regarding one or more rules classified into a cluster represented by any of the designated nodes in response to designation of the node. The explanatory information 1010 is, for example, information representing a feature of one or more pieces of training data that, among multiple pieces of training data, satisfy at least any of the conditions represented by the one or more rules classified into the clusters.

The explanatory information 1010 is, for example, a decision tree capable of classifying, as a positive example, one or more pieces of training data that, among the multiple pieces of training data, satisfy at least any of the conditions represented by the one or more rules classified into the clusters. The explanatory information 1010 may be, for example, a feature vector containing, as a component, a statistical value for each explanatory variable in one or more pieces of training data that, among the multiple pieces of training data, satisfy at least any of the conditions expressed by one or more rules classified into a cluster.

As a result, the information processing device 100 can make it easier for a user to intuitively grasp relationships between the rules forming the model and allows the user to easily grasp the contents of the model. The information processing device 100 allows the user to easily grasp the contents of one or more rules classified into a cluster.

### (Specific Example of Operation of Information Processing Device 100)

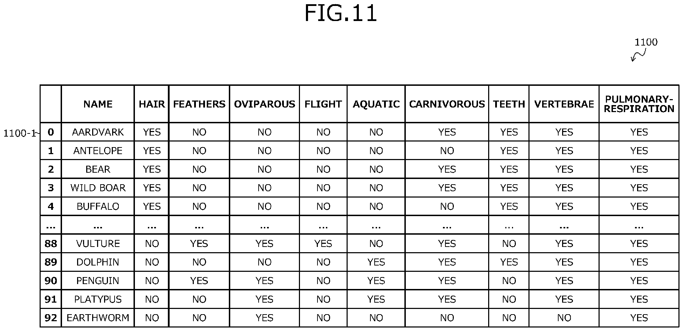

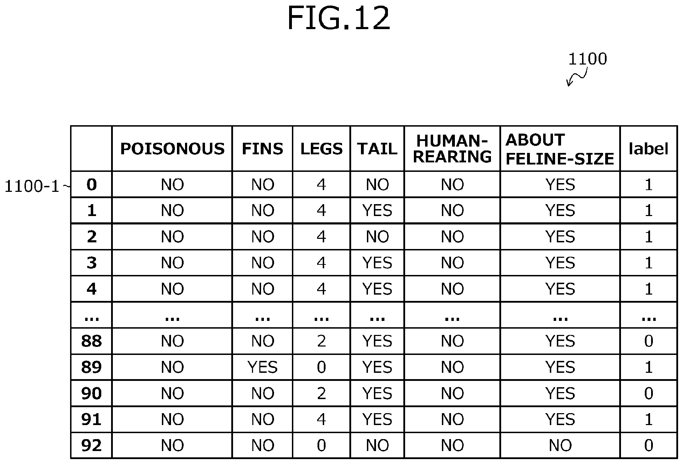

Next, a specific example of the operation of the information processing device 100 is described with reference to Figs. 11 to 24. First, a specific example of the information processing device 100 obtaining multiple pieces of training data and learning a model is described with reference to Figs. 11 and 12.

Figs. 11 and 12 are explanatory views depicting a specific example of learning a model. In Figs. 11 and 12, the information processing device 100 obtains an animal data management table 1100. For convenience, the contents stored in the animal data management table 1100 are shown divided in Fig. 11 and Fig. 12. The animal data management table 1100 is implemented, for example, by a storage area such as the memory 302 or the recording medium 305 of the information processing device 100 depicted in Fig. 3.

As depicted in Fig. 11, the animal data management table 1100 has fields for id, name, hair, feathers, oviparous, flight, aquatic, carnivorous, teeth, vertebrae, and pulmonary respiration. As depicted in Fig. 12, the animal data management table 1100 further has fields for poison, fins, leg, tail, human-reared, about feline-size, and label.

In the animal data management table 1100, information is set in each field for each animal and animal data is stored as a record 1100-b. "b" is an arbitrary integer. In the examples depicted in Fig. 11 and Fig. 12, for example, 93 pieces of animal data are present. Thus, b is, for example, 1 to 93.

In the id field, an id which is a number assigned to an animal is set. In the name field, the name of the animal is set. In the hair field, information indicating whether the animal has hair/fur is set. In the feathers field, information indicating whether the animal has feathers is set. In the oviparous field, information indicating whether the animal is oviparous is set. In the flight field, information indicating whether the animal flies is set. In the aquatic field, information indicating whether the animal is aquatic is set.

In the carnivorous field, information indicating whether the animal is carnivorous is set. In the teeth field, information indicating whether the animal has teeth is set. In the vertebrae field, information indicating whether the animal has vertebrae is set. In the pulmonary respiration field, information indicating whether the animal performs pulmonary respiration is set.

In the poison field, information indicating whether the animal has poison is set. In the fins field, information indicating whether the animal has fins is set. In the leg field, information indicating the number of legs the animal has is set. In the tail field, information indicating whether the animal has a tail is set. In the human-rearing field, information indicating whether the animal is reared by humans is set. In the about feline-size field, information indicating whether the animal is about the size of a feline is set.

In the label field, flag information indicating whether the animal is a mammal is set. For example, flag information having a value of 1 indicates that the animal is a mammal while flag information having a value of 0 indicates that the animal is not a mammal. The information processing device 100 generates training data based on each animal data in the animal data management table 1100.

For example, the information processing device 100 generates training data for each animal data, which includes values of fields other than the id, name, and label of the animal data as explanatory variable values, the training data also includes the value of the label field of the animal data as a correct label. There are, for example, 15 explanatory variables. As a result, the information processing device 100 can generate 93 pieces of training data.

The information processing device 100 trains the model 600 based on the generated 93 pieces of training data. The model 600 represents, for example, 321 rules. A rule represents, for example, one or more conditions for classifying an animal as a mammal or not a mammal, using one or more explanatory variables. The contents of the model 600 are similar to those depicted in Fig. 6 and thus, description thereof is omitted.

The information processing device 100 may delete, from the model 600, a rule representing a condition that is not satisfied by at least x% or more of the 93 pieces of training data. "x" is, for example, 1. The information processing device 100 may delete, for example, a rule in which npos/(npos+nneg) is less than y from the model 600. "y" is, for example, 0.9. As a result, the information processing device 100 can learn the model 600.

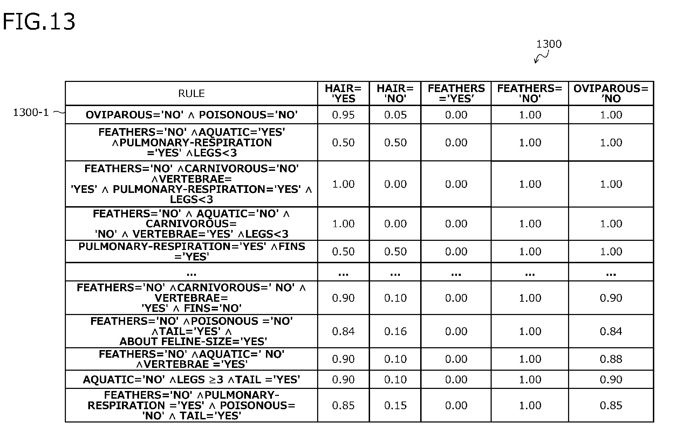

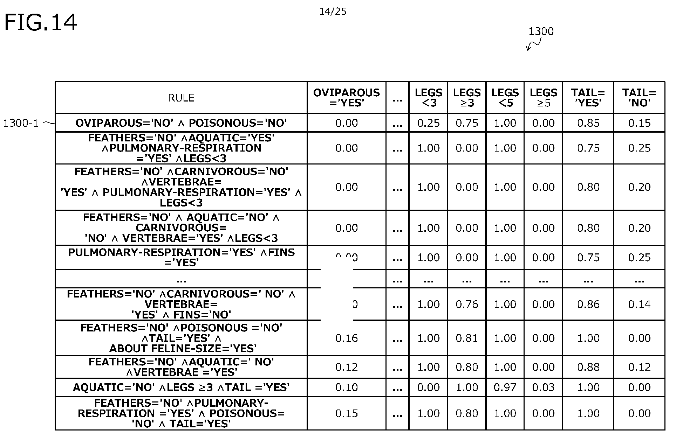

Next, a specific example in which the information processing device 100 generates feature vectors related to rules represented by the model 600 is described with reference to Figs. 13 and 14.

Figs. 13 and 14 are explanatory views depicting a specific example in which feature vectors, respectively, related to rules are generated. In Figs. 13 and 14, the information processing device 100 generates a feature vector related to each rule represented by the model 600, based on multiple training data. The information processing device 100 may, for example, replace values of explanatory variables 'yes' and 'no' with values 1 and 0, and then generate a feature vector. For example, for each of the rules represented by the model 600, the information processing device 100 identifies, among multiple pieces of training data, one or more pieces of training data that satisfy one or more conditions represented by the rule.

For example, the information processing device 100 generates a feature vector including, as a component, a statistical value for each explanatory variable in the identified one or more pieces of training data, for each rule represented by the model 600. The statistical value is, for example, the proportion of training data in which a specific explanatory variable value is a specific value or range among one or more pieces of training data that satisfy one or more conditions represented by the rule. The statistical value may be, for example, the maximum value, minimum value, average value, mode, or median value of the explanatory variable.

In the examples depicted Figs. 13 and 14, the information processing device 100 calculates, for each rule represented by the model 600, the proportion of training data in which hair='yes' among one or more pieces of training data that satisfy one or more conditions represented by the rule, as a component of the feature vector. Furthermore, the information processing device 100 calculates, for each rule represented by the model 600, the proportion of training data with hair='none' among one or more pieces of training data that satisfy one or more conditions represented by the rule, as a component of a feature vector.

Further, the information processing device 100 calculates, for each rule represented by the model 600, the proportion of training data with feathers='yes' among one or more pieces of training data that satisfy one or more conditions represented by the rule, the proportion being calculated as a component of a feature vector. Further, the information processing device 100 calculates, for each rule represented by the model 600, the proportion of training data with feathers='no' among one or more pieces of training data that satisfy one or more conditions represented by the rule, the proportion being calculated as a component of a feature vector.

Further, the information processing device 100 calculates, for each rule represented by the model 600, the proportion of training data with oviparous='no' among one or more pieces of training data that satisfy one or more conditions represented by the rule, the proportion being calculated as a component of a feature vector. Further, the information processing device 100 calculates, for each rule represented by the model 600, the proportion of training data with oviparous='yes' among one or more pieces of training data that satisfy one or more conditions represented by the rule, the proportion being calculated as a component of a feature vector.

Further, the information processing device 100 calculates, for each rule represented by the model 600, the proportion of training data with number of leg<3 among one or more pieces of training data that satisfy one or more conditions represented by the rule, the proportion being calculated as a component of a feature vector. Further, the information processing device 100 calculates, for each rule represented by the model 600, the proportion of training data with number of leg≥3 among one or more pieces of training data that satisfy one or more conditions represented by the rule, the proportion being calculated as a component of a feature vector.

Further, the information processing device 100 calculates, for each rule represented by the model 600, the proportion of training data with number of leg<5 among one or more pieces of training data that satisfy one or more conditions represented by the rule, the proportion being calculated as a component of a feature vector. Further, the information processing device 100 calculates, for each rule represented by the model 600, the proportion of training data with number of leg≥5 among one or more pieces of training data that satisfy one or more conditions represented by the rule, the proportion being calculated as a component of a feature vector.

Further, the information processing device 100 calculates, for each rule represented by the model 600, the proportion of training data with tail='yes' among one or more pieces of training data that satisfy one or more conditions represented by the rule, the proportion being calculated as a component of a feature vector. Further, the information processing device 100 calculates, for each rule represented by the model 600, the proportion of training data with tail='no' among one or more pieces of training data that satisfy one or more conditions represented by the rule, the proportion being calculated as a component of a feature vector. For example, the information processing device 100 generates a feature vector including the calculated components and stores the feature vector using the feature vector management table 1300. The feature vector management table 1300 is implemented by, for example, a storage area such as the memory 302 or the recording medium 305 of the information processing device 100 depicted in Fig. 3.

As depicted in Fig. 13, the feature vector management table 1300 has fields for rules, hair='yes', hair='no', feathers='yes', feathers='no', and oviparous='no'. As depicted in Fig. 14, the feature vector management table 1300 further has fields for oviparous='yes', legs<3, legs≥3, legs<5, legs≥5, tail='yes', and tail='no'. The feature vector management table 1300 stores feature vectors as records 1300-c by setting information in each field for each rule. "c" is an arbitrary integer.

In the rule field, a rule is set. In the field of hair='yes', the proportion of the training data with hair='yes' among the one or more training data that satisfy the one or more conditions represented by the rule is set as a component of the feature vector. **In** the field of hair='no', the proportion of the training data with hair='no' among the one or more training data that satisfy the one or more conditions represented by the rule is set as a component of the feature vector.

**In** the field of feathers='yes', the proportion of the training data with feathers='yes' among the one or more training data that satisfy the one or more conditions represented by the rule is set as a component of the feature vector. **In** the field of feathers='no', the proportion of the training data with feathers='no' among the one or more training data that satisfy the one or more conditions represented by the rule is set as a component of the feature vector.

**In** the field of oviparity='no', the proportion of the training data with oviparity='no' among the one or more training data that satisfy the one or more conditions represented by the rule is set as a component of the feature vector. **In** the field of oviposition='yes', the proportion of the training data with oviposition='yes' among the one or more training data that satisfy one or more conditions represented by the above rule is set as a component of the feature vector.

**In** the field of legs<3, the proportion of the training data with the number of legs<3 among the one or more training data that satisfy one or more conditions represented by the above rule is set as a component of the feature vector. In the field of legs≥3, the proportion of the training data with the number of legs≥3 among the one or more training data that satisfy one or more conditions represented by the above rule is set as a component of the feature vector.

In the field of legs<5, the proportion of the training data with the number of legs<5 among the one or more training data that satisfy one or more conditions represented by the above rule is set as a component of the feature vector. In the field of legs≥5, the proportion of the training data with the number of legs≥5 among the one or more training data that satisfy one or more conditions represented by the above rule is set as a component of the feature vector.

**In** the field of tail='yes', the ratio of the training data with tail='yes' among one or more training data satisfying one or more conditions represented by the rule is set as a component of the feature vector. In the field of tail='no', the ratio of the training data with tail='no' among one or more training data satisfying one or more conditions represented by the rule is set as a component of the feature vector.

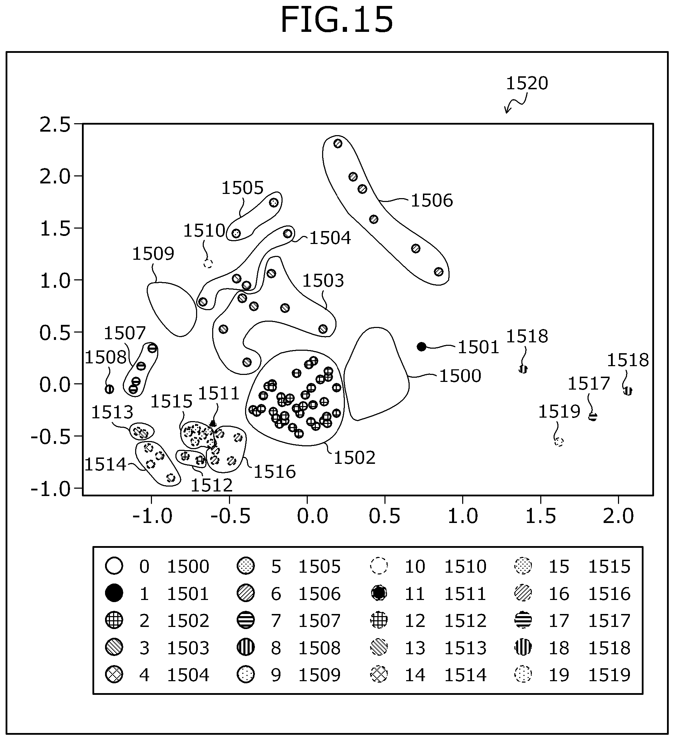

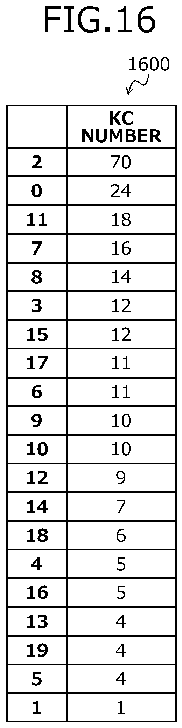

Next, with reference to Figs. 15 and 16, a specific example of the information processing device 100 clustering a rule set with reference to the feature vector management table 1300 is described.

Figs. 15 and 16 are explanatory views depicting a specific example of clustering a rule set. In Fig. 15, the information processing device 100 refers to the feature vector management table 1300 and classifies each rule represented by the model 600 into one of multiple clusters, based on the Euclidean distance between the feature vectors by the x-means method. For example, the information processing device 100 classifies each rule represented by the model 600 into one of 20 clusters. **In** the following description, an i-th cluster may be denoted as "cluster i". "i" is, for example, 0 to 19.

A graph 1520 in Fig. 15 depicts a result of arranging each rule represented by the model 600 in a two-dimensional space by principal component analysis. For example, the information processing device 100 classifies a rule group 1500 depicted in the graph 1520 into cluster 0. For example, the information processing device 100 classifies a rule group 1501 depicted in the graph 1520 into cluster 1. For example, the information processing device 100 classifies a rule group 1502 depicted in the graph 1520 into cluster 2. For example, the information processing device 100 classifies a rule group 1503 depicted in the graph 1520 into cluster 3. For example, the information processing device 100 classifies a rule group 1504 depicted in the graph 1520 into cluster 4.

For example, the information processing device 100 classifies a rule group 1505 depicted in the graph 1520 into cluster 5. For example, the information processing device 100 classifies a rule group 1506 depicted in the graph 1520 into cluster 6. For example, the information processing device 100 classifies a rule group 1507 depicted in the graph 1520 into cluster 7. For example, the information processing device 100 classifies a rule group 1508 depicted in the graph 1520 into cluster 8. For example, the information processing device 100 classifies a rule group 1509 depicted in the graph 1520 into cluster 9.

For example, the information processing device 100 classifies a rule group 1510 depicted in the graph 1520 into cluster 10. For example, the information processing device 100 classifies a rule group 1511 depicted in the graph 1520 into cluster 11. For example, the information processing device 100 classifies a rule group 1512 depicted in the graph 1520 into cluster 12. For example, the information processing device 100 classifies a rule group 1513 depicted in the graph 1520 into cluster 13. For example, the information processing device 100 classifies a rule group 1514 depicted in the graph 1520 into cluster 14.

For example, the information processing device 100 classifies a rule group 1515 depicted in the graph 1520 into cluster 15. For example, the information processing device 100 classifies a rule group 1516 depicted in the graph 1520 into cluster 16. For example, the information processing device 100 classifies a rule group 1517 depicted in the graph 1520 into cluster 17. For example, the information processing device 100 classifies a rule group 1518 depicted in the graph 1520 into cluster 18. For example, the information processing device 100 classifies a rule group 1519 depicted in the graph 1520 into cluster 19. For example, the information processing device 100 classifies a rule group 1520 depicted in the graph 1520 into cluster 20. Description is given with reference to Fig. 16.

Table 1600 in Fig. 16 shows, in descending order, the number of rules classified into each cluster, among the multiple rules represented by the model 600. For example, the table 1600 has a KC number field associated with each cluster number. The number of rules classified into the cluster is set in the KC number field.

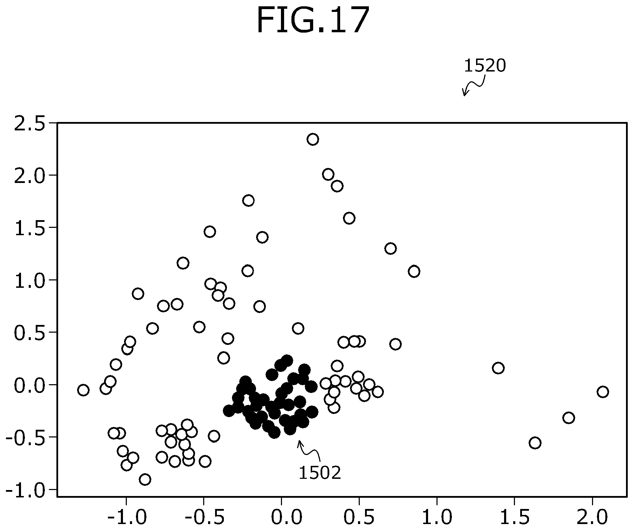

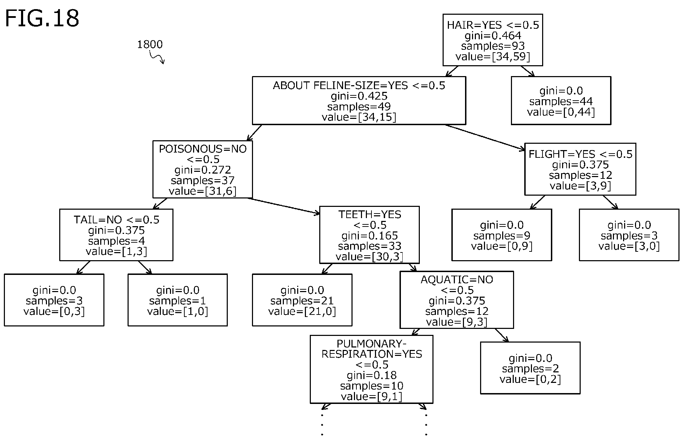

Next, a first specific example in which the information processing device 100 generates explanatory information related to a cluster is described with reference to Figs. 17 and 18.

Figs. 17 and 18 are explanatory views depicting a first specific example in which explanatory information related to a cluster is generated. As depicted in Fig. 17, the information processing device 100, for example, obtains a rule group 1502 classified into cluster 2 when generating explanatory information related to cluster 2. Description is given with reference to Fig. 18.

In Fig. 18, the information processing device 100, for example, identifies from among the multiple pieces of training data, one or more pieces of training data that satisfy at least any of the conditions represented by one or more rules included in the obtained rule group 1502. The information processing device 100, for example, may identify from among the multiple pieces of training data, one or more pieces of training data that satisfy all the conditions represented by one or more rules included in the obtained rule group 1502. The information processing device 100, for example, may identify from among the multiple pieces of training data, one or more pieces of training data that satisfy all the conditions represented by z% or more of the rules included in the obtained rule group 1502. "z" is, for example, 10.

The information processing device 100, for example, generates new training data by assigning labels representing positive examples to the values of multiple explanatory variables included in the identified one or more pieces of training data. For example, based on the generated new training data, the information processing device 100 generates a decision tree 1800 for classifying data, as explanatory information for cluster 2.

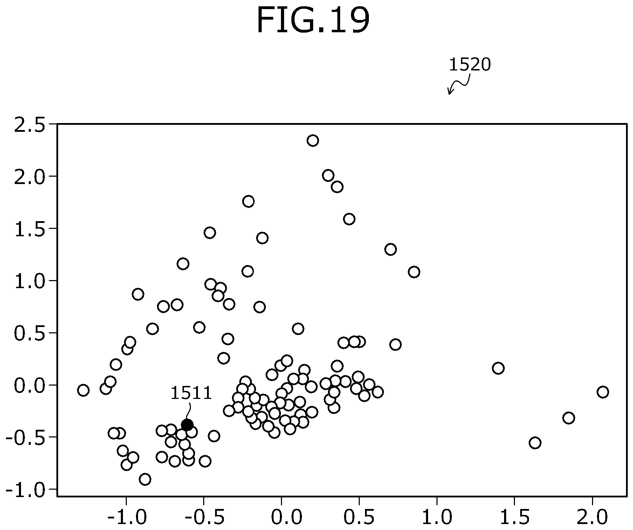

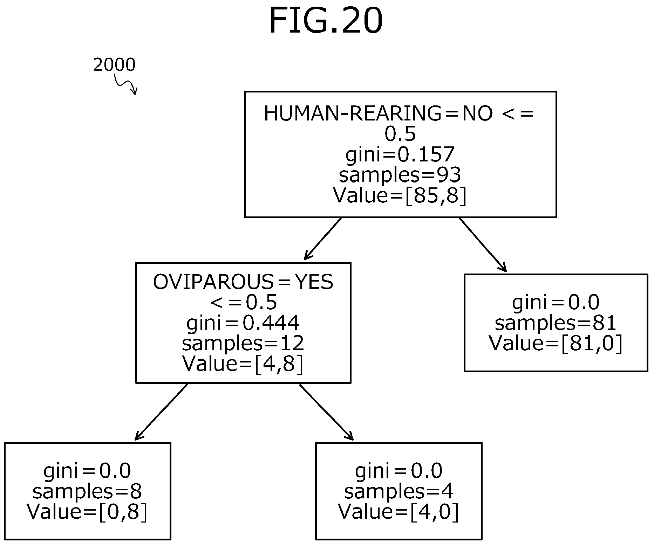

Next, a second specific example in which the information processing device 100 generates explanatory information for a cluster is described with reference to Figs. 19 and 20.

Figs. 19 and 20 are explanatory views depicting a second specific example in which explanatory information for a cluster is generated. As depicted in Fig. 19, the information processing device 100, for example, obtains a rule group 1511 classified into cluster 11 when generating explanatory information for cluster 11. Description is given with reference to Fig. 20.

In Fig. 20, the information processing device 100, for example, identifies, among the multiple training data, one or more training data that satisfy at least any of the conditions represented by one or more rules included in the obtained rule group 1511. The information processing device 100 may, for example, identify, among the multiple training data, one or more training data that satisfy all the conditions represented by one or more rules included in the obtained rule group 1511. For example, the information processing device 100 may identify from among the multiple pieces of training data, one or more pieces of training data that satisfy all conditions represented by z% or more of the rules included in the obtained rule group 1511. "z" is, for example, 10.

For example, the information processing device 100 generates new training data by adding labels representing positive examples to the values of multiple explanatory variables included in the identified one or more pieces of training data. For example, based on the generated new training data, the information processing device 100 generates a decision tree 2000 for classifying data, as explanatory information for the cluster 11. The information processing device 100 similarly generates explanatory information for other clusters.

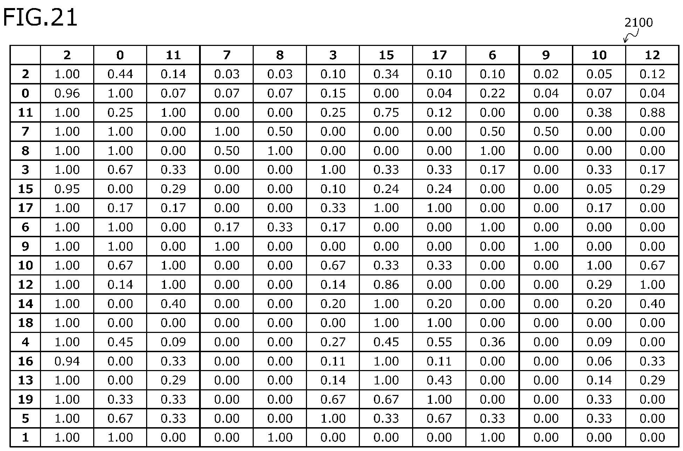

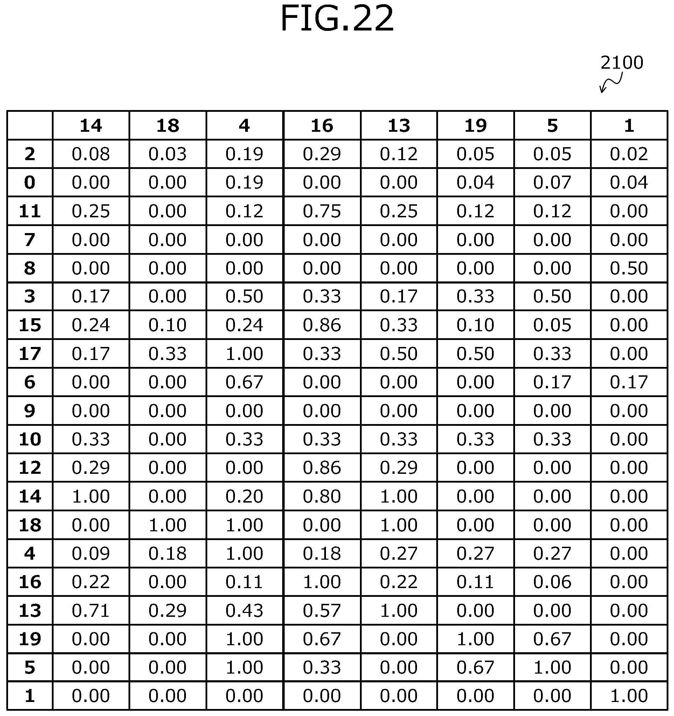

Next, with reference to Figs. 21 and 22, a specific example is described in which the information processing device 100 calculates the inclusion rate between multiple clusters.

Figs. 21 and 22 are explanatory views depicting a specific example in which the inclusion rate between clusters is calculated. In Figs. 21 and 22, the information processing device 100 calculates the inclusion rate between clusters. The information processing device 100 calculates, for each combination of clusters, the inclusion rate of one cluster of the combination with respect to the other cluster of the combination and the inclusion rate of the other cluster with respect to the one cluster. The inclusion rate of one cluster with respect to the other cluster is defined as, for example, (A∩B)/A. "A" is a training data group that satisfies at least any of the conditions represented by one or more rules classified into the other cluster. "B" is a training data group that satisfies at least any of the conditions represented by one or more rules classified into the one cluster.

The information processing device 100 calculates the inclusion rate between the clusters, for example, as shown in table 2100. The rows of table 2100 correspond to clusters, for example. The columns of table 2100 correspond to clusters, for example. An element in an i-th row and j-th column of table 2100 indicates the inclusion rate of cluster j with respect to cluster i. The information processing device 100 may calculate the inclusion rate between clusters by comparing the rules classified into the respective clusters. For example, the information processing device 100 may calculate the inclusion rate between the clusters for each combination of clusters based on the overlapping condition between one or more conditions represented by one or more rules classified into one cluster and one or more conditions represented by one or more rules classified into the other cluster.

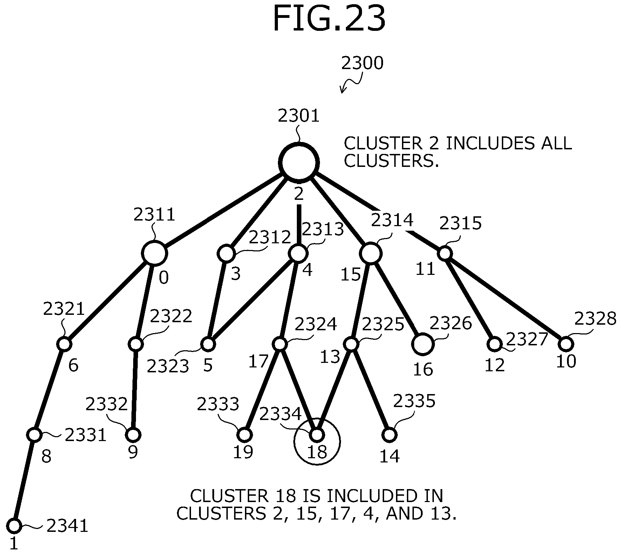

Next, with reference to Fig. 23, a specific example of the information processing device 100 identifying hierarchical relationships between the clusters is described.

Fig. 23 is an explanatory view depicting a specific example of identifying hierarchical relationships between the clusters. In Fig. 23, for each combination of clusters, the information processing device 100 determines whether one cluster includes the other cluster based on whether the inclusion rate of the one cluster with respect to the other cluster is at least equal to a threshold. The threshold is, for example, 0.9. The threshold is, for example, set in advance by a user of the model. For example, for any combination of clusters, when the inclusion rate of one cluster of a combination with respect to the other cluster of the combination is at least equal to a threshold, the information processing device 100 determines that the one cluster includes the other cluster. For each combination of clusters, the information processing device 100 determines whether one cluster includes the other cluster and determines whether the other cluster includes the one cluster to, thereby, identify inclusion relationships between clusters among the multiple clusters.

The information processing device 100 identifies a hierarchical relationship between clusters among the multiple clusters, based on the inclusion relationship between the clusters among the multiple clusters. For example, for each combination of clusters, the information processing device 100 determines whether one cluster of the combination has a hierarchical relationship in which the one cluster is higher than the other cluster of the combination, and whether the other cluster has a hierarchical relationship in which the other cluster is higher than the one cluster. For example, when a combination of any clusters has an inclusion relationship in which one cluster includes the other cluster, the information processing device 100 identifies a hierarchical relationship in which the one cluster is higher than the other cluster.

The information processing device 100 generates a graph 2300 showing the hierarchical relationship between the identified clusters. The graph 2300 includes nodes 2301, 2311, 2312, 2313, 2314, 2315, 2321, 2322, 2323, 2324, 2325, 2326, 2327, 2328, 2331, 2332, 2333, 2334, 2335, and 2341, which represent clusters. In the example depicted in Fig. 23, nodes 2301, 2311 to 2315, 2321 to 2328, 2331 to 2335, and 2341 are indicated by circles, for example. Numbers appended to the bottom of nodes 2301, 2311 to 2315, 2321 to 2328, 2331 to 2335, and 2341 are the numbers of the clusters represented by the nodes. The graph 2300 includes edges that connect nodes that represent respective clusters of cluster combinations having a hierarchical relationship among nodes 2301, 2311 to 2315, 2321 to 2328, 2331 to 2335, and 2341. The graph 2300 shows, for example, that cluster 2 contains all other clusters. The graph 2300 shows, for example, that cluster 18 is contained in clusters 2, 15, 17, 4, and 13.

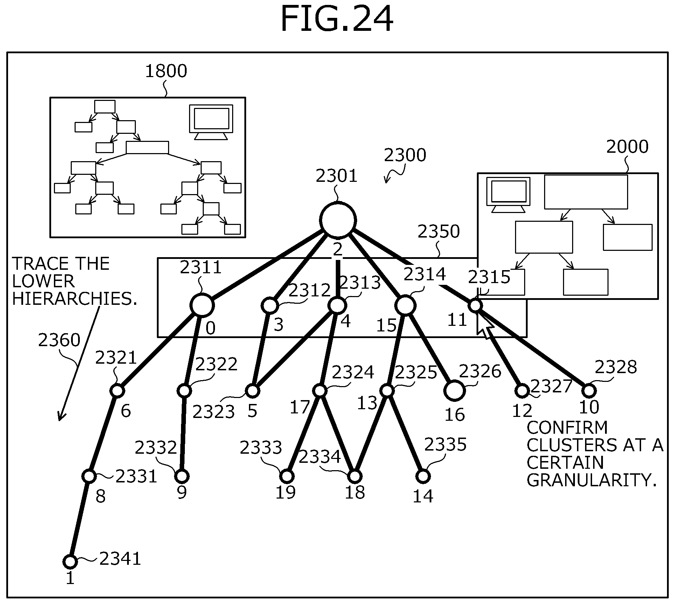

With reference to Fig. 24, a specific example is described in which the information processing device 100 displays hierarchical relationships between clusters.

Fig. 24 is an explanatory view depicting a specific example in which hierarchical relationships between clusters are displayed. In Fig. 24, information processing device 100 displays the generated graph 2300.

The information processing device 100 receives designation of any one of nodes 2301, 2311 to 2315, 2321 to 2328, 2331 to 2335, and 2341 of the displayed graph 2300. The information processing device 100 receives, for example, a click on any one of the nodes 2301, 2311 to 2315, 2321 to 2328, 2331 to 2335, and 2341 of the displayed graph 2300 as a designation of the node.

The information processing device 100 displays explanatory information concerning one or more rules classified into a cluster represented by any of the designated nodes in response to the designation of any one of the nodes. For example, in response to the designation of the node 2301, the information processing device 100 displays a decision tree 1800 that serves as explanatory information concerning the cluster 2 represented by the node 2301. In response to the designation of the node 2315, the information processing device 100 displays a decision tree 2000 that serves as explanatory information concerning the cluster 11 represented by the node 2315.

As a result, the information processing device 100 can make it easier for a user to intuitively grasp the relationship between the rules forming the model and allows the user to easily grasp the contents of the model. The information processing device 100 can make it easy to grasp the contents of one or more rules classified into clusters. The information processing device 100 can, for example, enable a user to confirm the contents of one or more rules classified into each cluster represented by a node group 2350 including the nodes 2311 to 2315. Thus, the information processing device 100 can, for example, enable a user to confirm, in parallel, the contents of each cluster that belongs to the same hierarchy and has similar granularity. Therefore, the information processing device 100 can, for example, enable a user to grasp that there are relatively large classifications of mammals, such as herbivorous, carnivorous, or livestock.

The information processing device 100, for example, enables confirmation by a user tracing the nodes 2301, 2311, 2321, 2331, and 2341 downwards, as shown by the arrow 2360. The information processing device 100 can, for example, enable a user to grasp how animals are classified in stages. As described, the information processing device 100 enables the user to confirm and compare clusters located in the horizontal direction and clusters located in the vertical direction and enables the user to confirm the contents of the model at a desired granularity.

### (Overall Processing Procedure)

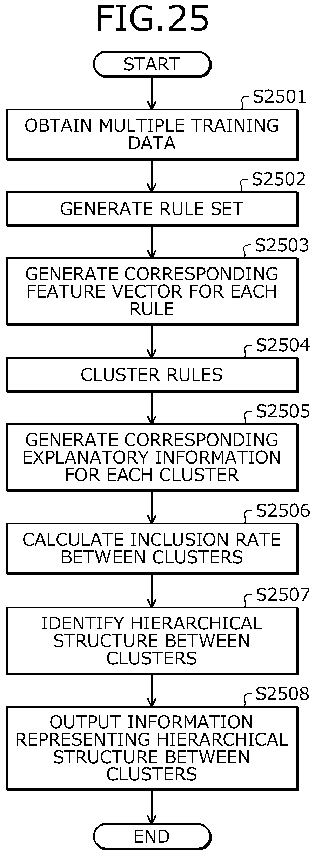

Next, an example of an overall processing procedure executed by the information processing device 100 is described with reference to Fig. 25. The overall processing is implemented by, for example, the CPU 301 depicted in Fig. 3, storage areas such as the memory 302 and the recording medium 305, and the network I/F 303.

Fig. 25 is a flowchart depicting an example of the overall processing procedure. In Fig. 25, the information processing device 100 obtains multiple training data (step S2501).

Next, the information processing device 100 generates a rule set based on the obtained multiple training data (step S2502). Next, the information processing device 100 generates a corresponding feature vector for each rule of the generated rule set, based on the obtained multiple training data (step S2503).

Next, the information processing device 100 classifies each rule of the generated rule set into one of multiple clusters by clustering the generated rule set, based on the generated feature vectors (step S2504). Then, the information processing device 100 generates corresponding explanatory information for each of the multiple clusters (step S2505).

Next, the information processing device 100 calculates the inclusion rate between clusters among the multiple clusters (step S2506). Next, the information processing device 100 identifies a hierarchical structure between clusters among the multiple clusters (step S2507).

Next, the information processing device 100 outputs information representing the hierarchical structure between the clusters (step S2508). Then, the information processing device 100 ends the overall processing.

As described above, according to the information processing device 100, it is possible to obtain multiple data including values of multiple explanatory variables. According to the information processing device 100, it is possible to obtain a rule set including multiple rules representing conditions for classifying data using one or more explanatory variables. According to the information processing device 100, it is possible to calculate feature values related to the rules, based on one or more data that, among the obtained multiple data, satisfy a condition represented by rules included in the obtained rule set. According to the information processing device 100, it is possible to classify each rule into any one of multiple clusters, based on the similarity between feature values among the calculated feature values of the rules. According to the information processing device 100, it is possible to identify an inclusion relationship between clusters among the multiple clusters, based on the conditions expressed by the rules classified into the clusters among the multiple clusters. According to the information processing device 100, it is possible to identify a hierarchical relationship between clusters among the multiple clusters, based on the inclusion relationships between clusters among the identified multiple clusters. According to the information processing device 100, it is possible to output information indicating the hierarchical relationships between clusters among the identified multiple clusters. Thus, the information processing device 100 can make it easier for the user to grasp the contents of the rule set.

According to the information processing device 100, it is possible to receive a designation of any one of the multiple clusters. According to the information processing device 100, it is possible to output information indicating a feature of one or more rules classified into any one of the clusters for which the designation has been received. As a result, the information processing device 100 can make it easier for the user to grasp the contents of the cluster.

According to the information processing device 100, it is possible to generate rules included in a rule set by machine learning based on training data in which samples including values of multiple explanatory variables are associated with correct labels indicating the results of classifying the samples. As a result, the information processing device 100 can appropriately generate a rule set. The information processing device 100 can generate a rule set by itself and can easily operate independently.

According to the information processing device 100, it is possible to identify, among the multiple pieces of data that have been obtained, one or more pieces of data that satisfy a condition expressed by each rule included in the obtained rule set. According to the information processing device 100, it is possible to calculate a feature vector related to the rule, the statistical values related to each of the multiple explanatory variables in the identified one or more pieces of data being components of the feature vector. As a result, the information processing device 100 can accurately evaluate the similarity of the rules and cluster the rule set.

According to the information processing device 100, for each cluster, a data set that satisfies a condition represented by one or more rules classified into the cluster can be identified among the multiple data obtained. According to the information processing device 100, for each combination of clusters among the multiple clusters, an inclusion rate of one cluster with respect to the other cluster can be calculated. According to the information processing device 100, when an inclusion rate of a first cluster with respect to a second cluster among the multiple clusters is at least equal to a threshold, it can be determined that the first cluster has an inclusion relationship that includes the second cluster. According to the information processing device 100, an inclusion relationship between clusters among the multiple clusters can be identified. Thus, the information processing device 100 can identify an inclusion relationship between clusters with high accuracy. The information processing device 100 can make it possible to evaluate the inclusion relationship between clusters even when the types of rules included in each cluster are different.

According to the information processing device 100, for each combination of clusters among the multiple clusters, an inclusion rate of one cluster of a combination with respect to the other cluster of the combination can be calculated. According to the information processing device 100, when the inclusion rate of a first cluster with respect to a second cluster among the multiple clusters is at least equal to a threshold value, it can be determined that the first cluster has an inclusion relationship that includes the second cluster. According to the information processing device 100, it is possible to identify inclusion relationships between the multiple clusters. As a result, the information processing device 100 can identify inclusion relationships between the clusters with high accuracy. The information processing device 100 can make it possible to evaluate an inclusion relationship between clusters even when the types of rules included in each cluster are different.

According to the information processing device 100, when a third cluster among multiple clusters has an inclusion relationship that includes a fourth cluster, it can be determined that the third cluster has a hierarchical relationship in which the third cluster is higher than the fourth cluster. According to the information processing device 100, it is possible to identify hierarchical relationships between clusters among the multiple clusters. As a result, the information processing device 100 can identify hierarchical relationships between clusters with high accuracy.

The information processing method described in the present embodiment may be implemented by executing a prepared program on a computer such as a personal computer or a workstation. The information processing program described in the present embodiment is stored to a computer-readable recording medium and is readout from the recording medium and executed by a computer. The recording medium is a hard disk, a flexible disk, a compact disc read-only memory (CD-ROM), a magneto optical disc (MO), a digital versatile disc (DVD), and the like. Further, the information processing program described in the present embodiment may be distributed by a network such as the Internet.

### EXPLANATIONS OF LETTERS OR NUMERALS

100 information processing device
110 rule set
120, 1000, 1520, 2300 graph
200 information processing system
201 learning device
202 client device
210 network
300 bus
301 CPU
302 memory
303 network I/F
304 recording medium I/F
305 recording medium
400 storage unit
401 obtaining unit
402 learning unit
403 calculating unit
404 classifying unit
405 identifying unit
406 generating unit
407 output unit
500 input
501, 502, 503, 504, 505, 506, 507 process
600 model
701, 702 rule
711, 712 feature vector
800, 900, 1600, 2100 table
1001, 1011, 1012, 1013, 1014, 1015, 1021, 1022, 1023, 1024, 1025, 1026, 1027, 1028, 1031, 1032, 1033, 1034, 1035, 1041, 2301, 2311, 2312, 2313, 2314, 2315, 2321, 2322, 2323, 2324, 2325, 2326, 2327, 2328, 2331, 2332, 2333, 2334, 2335, 2341 node
1010 explanatory information
1100 animal data management table
1300 feature vector management table
1500, 1501, 1502, 1503, 1504, 1505, 1506, 1507, 1508, 1509, 1510, 1511, 1512, 1513, 1514, 1515, 1516, 1517, 1518, 1519 rule group
1800, 2000 decision tree

## Claims

1. An information processing program causing a computer to execute a process comprising:
obtaining a plurality of data including values of a plurality of explanatory variables;
obtaining a rule set including rules representing conditions for classifying the plurality of data using one or more of the plurality of explanatory variables;
calculating a plurality of feature values, each of the plurality of feature values being calculated for a corresponding one of the rule set based on one or more data of the obtained plurality of data, the one or more data satisfying a condition represented by the corresponding one of the rule set;
classifying the rules of the rule set into any of a plurality of clusters, based on a similarity between feature values of the calculated plurality of feature values;
identifying an inclusion relationship between clusters of the plurality of clusters, based on the conditions represented by the rules classified into each of the plurality of clusters;
identifying a hierarchical relationship between the clusters of the plurality of clusters, based on the identified inclusion relationship between the clusters of the plurality of clusters; and
outputting information indicating the identified hierarchical relationship between the clusters of the plurality of clusters.

2. The information processing program according to claim 1, the process further comprising
receiving a designation of any one of the plurality of clusters, wherein
the outputting includes outputting information indicating a feature possessed by one or more the rules classified into the any one of the clusters for which the designation is received.

3. The information processing program according to claim 1 or 2, wherein
the rules included in the rule set are generated by machine learning based on training data in which samples including the values of the plurality of explanatory variables are associated with correct labels indicating a result of classifying the samples.

4. The information processing program according to claim 1 or 2, wherein
the calculating includes calculating a feature vector related to each rule included in the obtained rule set, the feature vector having, as a component, a statistical value related to each of the plurality of explanatory variables in the one or more data of the obtained plurality of data, the one or data satisfying a condition represented by the each rule.

5. The information processing program according to claim 1 or 2, the process further comprising:
identifying, for each of the plurality of clusters, a data set from the obtained plurality of data, the data set satisfying a condition represented by one or more of the rules classified into the each of the plurality of clusters; and
calculating, for each combination of a first cluster and a second cluster of the plurality of clusters, an inclusion rate of the second cluster in the first cluster, the inclusion rate representing a proportion that data overlapping between a first identified data set that satisfies a condition represented by one or more rules classified into the first cluster and a second identified data set that satisfies a condition represented by one or more rules classified into the second cluster occupies in the entire second data set that satisfies a condition represented by the one or more rules classified into the second cluster, wherein
the identifying the inclusion relationship includes determining that the first cluster includes the second cluster when the inclusion rate of the first cluster in the second cluster is at least equal to a threshold value, thereby, identifying the inclusion relationship.

6. The information processing program according to claim 1 or 2, the process further comprising:
calculating, for each combination of a first cluster and a second cluster of the plurality of clusters, an inclusion rate of the second cluster in the first cluster, the inclusion rate representing a proportion that conditions overlapping between a first condition set represented by one or more rules classified into the first cluster and a second condition set represented by one or more rules classified into the second cluster occupy in the entire second condition set represented by the one or more rules classified into the second cluster, wherein
the identifying the inclusion relationship includes identifying the inclusion relationship by determining that the first cluster includes the second cluster when the inclusion rate of the second cluster in the first cluster is at least equal to a threshold value.

7. The information processing program according to claim 5, wherein
the identifying the hierarchical relationship includes identifying a hierarchical relationship between a third cluster and a fourth cluster of the plurality of clusters by determining that the third cluster is higher in the hierarchical relationship than is the fourth cluster when the third cluster includes the fourth cluster.

8. An information processing method executed by a computer, the method comprising:
obtaining a plurality of data including values of a plurality of explanatory variables;
obtaining a rule set including rules representing conditions for classifying the plurality of data using one or more of the plurality of explanatory variables;
calculating a plurality of feature values, each of the plurality of feature values being calculated for a corresponding one of the rule set based on one or more data of the obtained plurality of data, the one or more data satisfying a condition represented by the corresponding one of the rule set;
classifying the rules of the rule set into any of a plurality of clusters, based on a similarity between feature values of the calculated plurality of feature values;
identifying an inclusion relationship between clusters of the plurality of clusters, based on the conditions represented by the rules classified into each of the plurality of clusters;
identifying a hierarchical relationship between the clusters of the plurality of clusters, based on the identified inclusion relationship between the clusters of the plurality of clusters; and
outputting information indicating the identified hierarchical relationship between the clusters of the plurality of clusters.

9. An information processing device, comprising a controller, wherein the controller is configured to:
obtain a plurality of data including values of a plurality of explanatory variables;
obtain a rule set including rules representing conditions for classifying the plurality of data using one or more of the plurality of explanatory variables;
calculate a plurality of feature values, each of the plurality of feature values being calculated for a corresponding one of the rule set based on one or more data of the obtained plurality of data, the one or more data satisfying a condition represented by the corresponding one of the rule set;
classify the rules of the rule set into any of a plurality of clusters, based on a similarity between feature values of the calculated plurality of feature values;
identify an inclusion relationship between clusters of the plurality of clusters, based on the conditions represented by the rules classified into each of the plurality of clusters;
identify a hierarchical relationship between the clusters of the plurality of clusters, based on the identified inclusion relationship between the clusters of the plurality of clusters; and
output information indicating the identified hierarchical relationship between the clusters of the plurality of clusters.
